# EUROPÄISCHE PATENTSCHRIFT

(11) **EP 0 922 528 B1**
(45) Veröffentlichungstag und Bekanntmachung des Hinweises auf die Patenterteilung: **21.03.2007**
(21) Anmeldenummer: 97121488.7
(22) Anmeldetag: 06.12.1997
(51) Int. Cl.: B23Q 5/26, B23Q 1/52, B23B 29/034

(54) **Vorrichtung zur stufenlos verstellbaren Halterung eines Werkzeuges an einer antreibbaren Werkzeugspindel einer Werkzeugmaschine**
Toolholder for rotating tool, allowing continuous tool radial adjustment
Porte outil pour outil rotatif, permettant un réglage radial continu de l'outil

(43) Veröffentlichungstag der Anmeldung: 16.06.1999
(73) Patentinhaber: Iprotec Maschinen- und Edelstahlprodukte GmbH, 32469 Petershagen-Friedewalde (DE)
(72) Erfinder:
(74) Vertreter: Stenger, Watzke & Ring

(56) Entgegenhaltungen:
- DE-A- 2 040 020
- FR-A- 459 327
- US-A- 2 483 096

## Beschreibung

Die Erfindung betrifft eine Vorrichtung zur stufenlos verstellbaren Halterung eines Werkzeuges an einer antreibbaren Werkzeugspindel einer Werkzeugmaschine.

Zur stufenlosen Verstellung der Werkzeughalterung an einer Werkzeugmaschine, beispielsweise einer Drehmaschine, sind aus der Praxis sogenannte Plandrehschieber bekannt. Diese Plandrehschieber weisen einen translatorisch bewegten Schlitten auf, über den das Werkzeug auf das Werkstück zu bewegbar ist. Zum Ausgleich der beim Verschieben des Schiebers auftretenden fliehkraftbedingten Unwuchten weisen die bekannten Plandrehschieber entweder einen Ausgleich über einen gegenläufigen Schieber oder über Gegengewichte auf.

Nachteilig bei diesen bekannten Vorrichtungen zur stufenlos verstellbaren Halterung eines Werkzeugs an einer Spindel einer Werkzeugmaschine ist, daß einerseits nur eine translatorische Bewegung des Werkzeuges stattfinden kann und andererseits aufgrund der verbleibenden Unwuchten und Fliehkräfte eine stufenlose Verstellung im µm-Bereich bei hohen Bearbeitungsdrehzahlen nicht möglich ist.

Aus der DE 2040020 ist eine Bohreinheit insbesondere zur Durchführung von Feinbohrarbeiten bekannt, bei der eine antreibbare Arbeitsspindel einen quer zur Spindelachse schwenkbaren Werkzeughalter aufweist. Der Werkzeughalter ist durch mindestens eine die Querschwenkachse definierende Drehstabfeder mit dem Spindelkopf verbunden. Die Drehstabfeder erzeugt die einer Auslenkung des Werkzeughalters entgegenwirkende Rückstellkraft. Der Werkzeughalter wird mittels eines axial verschiebbaren Verstellgliedes verschwenkt.

Der Erfindung liegt die Aufgabe zugrunde, eine Vorrichtung zur stufenlos verstellbaren Halterung eines Werkzeuges an einer antreibbaren Werkzeugspindel einer Werkzeugmaschine zu schaffen, die bei einem nahezu vollkommenen Ausgleich der fliehkraftbedingten Unwuchten eine vielseitige Verstellung des Werkzeuges im *µ*m-Bereich ermöglicht.

Diese Aufgabe ist durch die Merkmale des Anspruchs 1 gelöst.

Durch die Verschwenkung des Werkzeugträgers um eine Achse, die die Werkzeugspindeldrehachse unter einem Winkel, vorzugsweise einem rechten Winkel schneidet, ergibt sich die Möglichkeit, die beiderseits der Schwenkachsen liegenden Massen des Werkzeugträgers und Werkzeugs derart auszugleichen, daß der Massenschwerpunkt auf dem Schnittpunkt der Schwenkachse und der Drehachse liegt, so daß bei einer Rotation des im Gehäuse verstellbar gelagerten Werkzeugträgers keine aufgrund der Fliehkraft entstehende Unwucht auftritt. Erst aufgrund dieser Vermeidung von fliehkraftbedingten Unwuchten ist es möglich, den Werkzeugträger und damit das Werkzeug derart feinfühlig zu verstellen, daß Bewegungsänderungen im *µ*m-Bereich möglich werden, die ihrerseits Voraussetzung für eine kontinuierliche Verstellung, insbesondere durch eine CNC-Steuerung ist.

Aufgrund der schwenkbaren Lagerung des Werkzeugträgers ist es darüber hinaus bei der erfindungsgemäßen Vorrichtung möglich, nicht nur rein translatorische Bewegungen des Werkzeugs durchzuführen.

Erfindungsgemäß ist der Werkzeugträger mit einem Schwenkkolben versehen, der in einem Zylinderraum des Gehäuses angeordnet und an gegenüberliegenden Seiten mit einem Druckmittel beaufschlagbar ist. Bei dieser Ausgestaltung als druckmittelbetätigter Schwenkkolben ist eine besonders feinfühlige und leichte Verschwenkung des Werkzeugträgers mit hoher Kraft durch Umpumpen des Druckmittels möglich.

Gemäß einer praktischen Ausführungsform des mit einem Schwenkkolben versehenen Werkzeugträgers ist der Werkzeugträger scheibenartig mit angeformten Schwenkkolben in der Form eines Kreisringabschnittes ausgebildet, der in einem kreisringabschnittförmigen Zylinderraum des Gehäuses angeordnet ist. Bei dieser Ausführungsform stellt der kreisringabschnittförmige Schwenkkolben das Gegengewicht zur eigentlichen Werkzeughalterung samt Werkzeug dar, wodurch wiederum ein Massenausgleich stattfindet.

Weiterhin wird mit der Erfindung vorgeschlagen, daß die Mantelflächen und Stirnflächen des Werkzeugträgers und des Schwenkkolbens als Führungsflächen gegenüber dem Gehäuse ausgebildet sind. Bei dieser Ausgestaltung stellen die Mantelflächen und Stirnflächen gleichzeitig die Dichtflächen dar, wenn als Antrieb für den Schwenkkolben ein Druckmittelantrieb vorgesehen ist.

Um ein spielfreies und übertragungsfehlerfreies Verstellen des Werkzeugträgers und damit des Werkzeugs zu ermöglichen, ist gemäß einer bevorzugten Ausführungsform der Erfindung zwischen dem Gehäuse und dem Werkzeugträger ein direktes Meßsystem angeordnet. Direkt bedeutet in diesem Zusammenhang, daß das Meßsystem unmittelbar die Verstellung des Werkzeugträgers ohne Zwischenschaltung weiterer Übertragungselemente registriert.

Schließlich wird vorgeschlagen, daß das Werkzeug mittels eines wiederholgenauen Schnellwechselsystems unverdrehbar am Werkzeugträger lösbar befestigt ist. Durch die Verwendung eines solchen Schnellwechselsystems wird sichergestellt, daß einerseits der Werkzeugwechsel vollautomatisch und ohne lange Stillstandszeiten erfolgen kann und andererseits durch die wiederholgenaue und unverdrehbare Befestigung des Werkzeugs gewährleistet ist, daß aufgrund der bekannten Werkzeuggeometrieen die Bearbeitung ohne eine neue Ausrichtung und Vermessung des Werkzeuges weitergeführt werden kann.

Gemäß einer praktischen Ausführungsform der Erfindung sind dem Werkzeugschnellwechselsystem und/oder dem Werkzeug durch den Werkzeugträger gasförmige und/oder flüssige Medien zu Kühl-, Schneid- und Reinigungszwecken zuführbar. Bei diesen gasförmigen und/oder flüssigen Medien kann es sich beispielsweise um Druckluft zum Reinigen, Schmieröl zum Schneiden und Kühlen oder Stickstoff zum Kühlen handeln.

Weitere Merkmale und Vorteile der Erfindung ergeben sich aus der nachfolgenden Beschreibung der zugehörigen Zeichnung, in der schematisch der Aufbau eines Ausführungsbeispiels einer erfindungsgemäßen Vorrichtung zur stufenlos verstellbaren Halterung eines Werkzeugs an einer antreibbaren Spindel einer Werkzeugmaschine dargestellt ist. In der Zeichnung zeigt:
- Fig. 1: einen schematischen Aufbau einer Werkzeugmaschine mit Werkstückspindel und achsparallel versetzter Werkzeugspindel und
- Fig. 2: eine schematische Draufsicht auf eine erfindungsgemäße stufenlos verstellbare Halterung eines Werkzeugs.

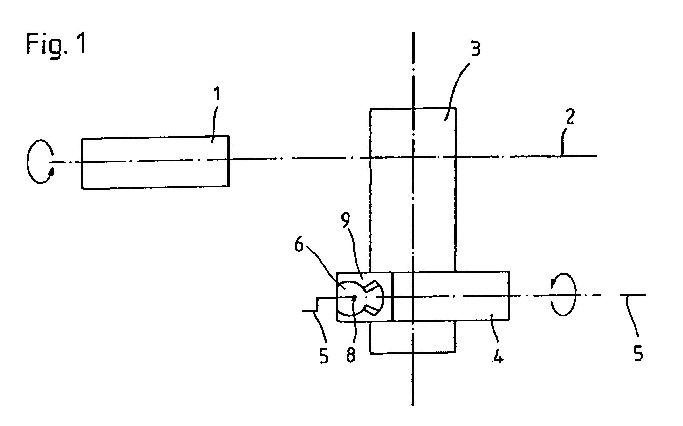

In Fig. 1 ist schematisch der prinzipielle Aufbau einer Werkzeugmaschine dargestellt. Die nicht näher dargestellte Werkzeugmaschine mit einer Einspannung für mindestens ein Werkstück weist eine antreibbare Werkstückspindel 1 auf, über die das Werkstück um eine Werkstückdrehachse 2 gedreht wird. Die Werkzeugmaschine umfaßt ferner einen Schlitten 3, über den eine Werkzeugspindel 4 sowohl radial zur Werkstückdrehachse 2 als auch axial in Längsrichtung der Werkstückdrehachse 2 verfahrbar ist, wobei die Werkzeugspindel 4 um eine Werkzeugspindeldrehachse 5 drehend angetrieben wird.

Wie weiterhin aus Fig. 1 ersichtlich ist, weist die Werkzeugspindel 4 einen Werkzeugträger 6 auf, an dem ein auswechselbares Werkzeug 7 unverdrehbar befestigt ist. Dieser Werkzeugträger 6 ist um eine unter einem Winkel zur Werkzeugspindeldrehachse 5 verlaufenden Werkzeugträgerdrehachse 8 verschwenkbar in einem Gehäuse 9 gelagert.

Durch die schwenkbare Lagerung des Werkzeugträgers 6 in dem Gehäuse 9 der Werkzeugspindel 4 ist es bei einer solchermaßen ausgebildeten Werkzeugmaschine möglich, das Werkzeug 7 nicht nur translatorisch über die Verstellung der Werkzeugspindel 4 über den Schlitten 3 auf die Werkstückdrehachse 2 zuzubewegen, sondern darüber hinaus auch das Werkzeug 7 gegenüber der Werkstückdrehachse 2 zu verschwenken.

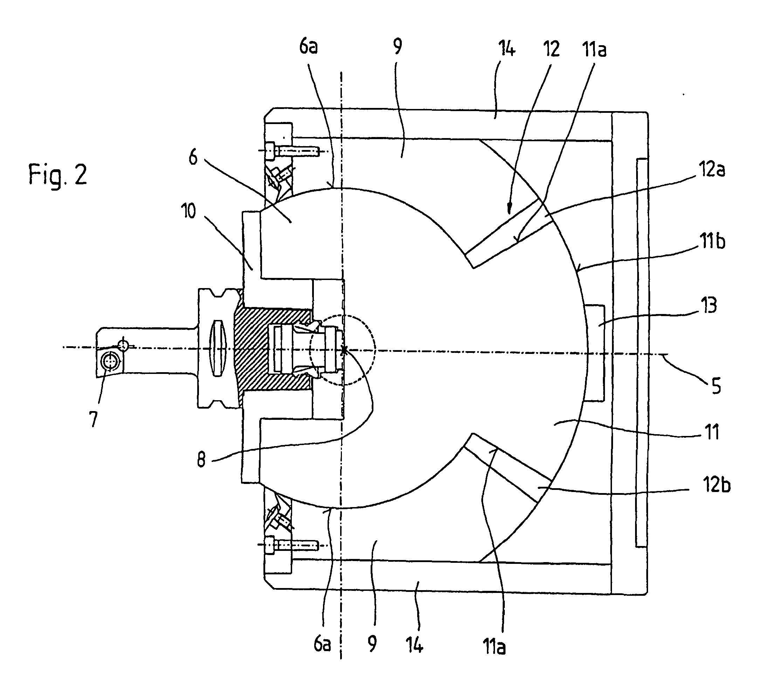

Der genauere Aufbau des Werkzeugträgers 6 ist schematisch in Fig. 2 dargestellt. Zur Halterung des Werkzeugs 7 weist der Werkzeugträger 6 ein Schnellwechselsystem 10 auf, in welchem die jeweils zu verwendenden Werkzeuge 7 wiederholgenau und unverdrehbar festlegbar sind. Das wiederholgenaue Festlegen der Werkzeuge 7 ist für eine gleichbleibende Bearbeitungsgenauigkeit unverzichtbar, da die geometrischen Abmessungen eines jeden Werkzeuges 7 als Ausgangswerte in die rechnergesteuerten Bearbeitungsprogramme der Werkzeugmaschine eingehen. Durch eine ungenaue Plazierung eines Werkzeugs 7 am Werkzeugträger 6 würden somit trotz der bekannten Geometrie des verwendeten Werkzeugs 7 unbrauchbare Werkstücke erstellt, da das Werkzeug 7 nicht lagegenau zu den Drehachsen 2, 5 und 8 positioniert wäre.

Beim dargestellten Ausführungsbeispiel einer Vorrichtung zur stufenlos verstellbaren Halterung eines Werkzeugs 7 an einer antreibbaren Werkzeugspindel 4 einer Werkzeugmaschine ist der Werkzeugträger 6 mit einem Schwenkkolben 11 versehen ausgebildet, der in einem Zylinderraum 12 des Gehäuses 9 angeordnet zum Verschwenken des Werkzeugträgers 6 mit Druckmittel beaufschlagbar ist. Der scheibenartig ausgebildete Werkzeugträger 6 mit dem angeformten Schwenkkolben 11 in der Form eines Kreisringabschnittes ist um die Werkzeugträgerdrehachse 8 verschwenkbar, die im dargestellten Ausführungsbeispiel rechtwinklig zur Werkzeugspindeldrehachse 5 verläuft.

Das Verschwenken des Werkzeugträgers 6 erfolgt dadurch, daß in den ebenfalls kreisringabschnittförmigen Zylinderraum 12 über nicht näher dargestellte Zuführungen ein Druckmittel eingeleitet wird. Beim Umpumpen des Druckmittels von der einen Kammer 12a zur anderen Kammer 12b des Zylinderraums 12 wird ein unterschiedlicher Druck auf die Stirnflächen 11a des Schwenkkolbens 11 ausgeübt, so daß der Schwenkkolben 11 um die Werkzeugträgerdrehachse 8 verschwenkt wird.

Die Mantelflächen 6a und 11b des Werkzeugträgers 6 sowie des Schwenkkolbens 11 sowie die Stirnflächen 11a des Schwenkkolbens 11 dienen bei dem dargestellten Ausführungsbeispiel als Führungsflächen gegenüber dem Gehäuse 9. Gleichzeitig dienen diese Flächen 6a, 11a und 11b als Dichtflächen für das in den Zylinderraum eingeleitete Druckmittel. Um eine möglichst reibungsarme Lagerung des Werkzeugträgers 6 im Gehäuse 9 zu erreichen, ist es möglich, zumindest die Mantelflächen 6a und 11b des Werkzeugträgers 6 sowie des Schwenkkolbens 11 mit einer den Reibungswiderstand verringernden Beschichtung zu versehen.

Durch die Anordnung eines direkten Meßsystems 13 zwischen dem Gehäuse 9 und dem Werkzeugträger 6 ist es möglich, spielfrei und ohne Übertragungsfehler den Grad der Verschwenkung des Werkzeugträgers 6 zu messen. Das direkte Meßsystem 13 kann beispielsweise aus einem an der Mantelfläche 11b des Schwenkkolbens 11 angeordneten Meßstreifen bestehen, der von einem im Gehäuse 9 angeordneten Abtastsystem unmittelbar abgetastet wird.

Durch die Verschwenkung des Werkzeugträgers 6 um die Werkzeugträgerdrehachse 8, die die Werkzeugspindeldrehachse 5 unter einem Winkel, vorzugsweise einem rechten Winkel schneidet, ergibt sich die Möglichkeit, die beiderseits der Werkzeugträgerdrehachse 8 liegenden Massen des Werkzeugträgers und des Werkzeugs 7 derart auszugleichen, daß der Massenschwerpunkt auf dem Schnittpunkt der Werkzeugträgerdrehachse 8 und der Werkstückspindeldrehachse 5 liegt. Bei einer Rotation des im Gehäuse 9 verstellbar gelagerten Werkzeugträgers 6 tritt somit aufgrund der Fliehkraft keine Unwucht auf, die eine exakte Führung des Werkzeugs 7 unmöglich machen würde.

Erst aufgrund dieser Vermeidung von fliehkraftbedingten Unwuchten ist es möglich, den Werkzeugträger 6 und das Werkzeug 7 derart feinfühlig zu verstellen, daß Bewegungsänderungen im µm-Bereich möglich sind.

Zur weiteren Kompensation der bei Drehzahlen der Werkzeugspindeldrehachse 5 von weit über 15.000 Umdrehungen pro Minute auftretenden Fliehkräfte kann das Gehäuse 9 von einer äußeren Druckmanschette 14 umgeben sein, wie dies im dargestellten Ausführungsbeispiel der Fall ist.

Selbstverständlich kann die voranstehend beschriebene Vorrichtung zur stufenlos verstellbaren Halterung eines Werkzeugs 7 an jeder Art von Bearbeitungszentren eingesetzt werden, nicht nur an Drehmaschinen, wie dies beim dargestellten Ausführungsbeispiel der Fall ist.

### Bezugszeichenliste

- 1: Werkstückspindel
- 2: Werkstückdrehachse
- 3: Schlitten
- 4: Werkzeugspindel
- 5: Werkzeugspindeldrehachse
- 6: Werkzeugträger
- 6a: Mantelfläche
- 7: Werkzeug
- 8: Werkzeugträgerdrehachse
- 9: Gehäuse
- 10: Schnellwechselsystem
- 11: Schwenkkolben
- 1 1 a: Stirnfläche
- 11 b: Mantelfläche
- 12: Zylinderraum
- 12a: Kammer
- 12b: Kammer
- 13: Meßsystem
- 14: Druckmanschette

## Patentansprüche

1. Vorrichtung zur stufenlos verstellbaren Halterung eines Werkzeuges an einer antreibbaren Werkzeugspindel (4) einer Werkzeugmaschine, wobei das Werkzeug (7) auswechselbar an einem Werkzeugträger (6) befestigt ist, der um eine unter einem Winkel, vorzugsweise rechtwinklig, zur Werkzeugspindeldrehachse (5) verlaufende Werkzeugträgerdrehachse (8) verschwenkbar in einem Gehäuse (9) gelagert ist, **dadurch gekennzeichnet, daß** der Werkzeugträger (6) mit einem Schwenkkolben (11) versehen ist, der in einem Zylinderraum (12) des Gehäuses (9) angeordnet und an gegenüberliegenden Seiten mit Druckmittel beaufschlagbar ist.

2. Vorrichtung nach Anspruch 1, **dadurch gekennzeichnet, daß** der Werkzeugträger (3) scheibenartig mit angeformten Schwenkkolben (11) in der Form eines Kreisringabschnittes ausgebildet ist, der in einem kreisringabschnittförmigen Zylinderraum (12) des Gehäuses (9) abgedichtet angeordnet ist.

3. Vorrichtung nach Anspruch 2, **dadurch gekennzeichnet, daß** die Mantelflächen (6a, 11b) und Stirnflächen (11a) des Werkzeugträgers (6) und des Schwenkkolbens (11) als Führungsflächen gegenüber dem Gehäuse (9) ausgebildet sind.

4. Vorrichtung nach mindestens einem der Ansprüche 1 bis 3, **dadurch gekennzeichnet, daß** zwischen dem Gehäuse (9) und dem Werkzeugträger (6) ein direktes Meßsystem (13) angeordnet ist.

5. Vorrichtung nach mindestens einem der Ansprüche 1 bis 4, **dadurch gekennzeichnet, daß** das Werkzeug (7) mittels eines wiederholgenauen Schnellwechselsystems (10) unverdrehbar am Werkzeugträger (6) lösbar befestigt ist.

6. Vorrichtung nach Anspruch 5, **dadurch gekennzeichnet, daß** dem Schnellwechselsystem (10) und/oder dem Werkzeug (7) durch den Werkzeugträger (6) gasförmige und/oder flüssige Medien zuführbar sind.

## Claims

1. Device for holding a tool so that it is continuously adjustable on a drivable tool spindle (4) of a machine tool, wherein the tool (7) is replaceably fixed on a tool support (6) which is mounted so that it can swivel in a housing (9) about an axis of rotation (8) of the tool support running at an angle, preferably at right angles, to the axis of rotation (5) of the tool spindle, **characterised in that** the tool support (6) is provided with a swivel piston (11) which is disposed in a cylinder chamber (12) of the housing (9) and can be supplied on opposite sides with a pressure medium.

2. Device as claimed in Claim 1, **characterised in that** the tool support (3) is of disc-like construction with swivel pistons (11) moulded on in the form of an annular section which is disposed in a sealed manner in a cylinder chamber (12) in the shape of an annular section in the housing (9).

3. Device as claimed in Claim 2, **characterised in that** the generated surfaces (6a, 11b) and end surfaces (11a) of the tool support (6) and of the swivel piston (11) are constructed as guide surfaces opposite the housing (9).

4. Device as claimed in at least one of Claims 1 to 3, **characterised in that** a direct measuring system (13) is disposed between the housing (9) and the tool support (6).

5. Device as claimed in at least one of Claims 1 to 4, **characterised in that** the tool (7) is releasably fixed by means of a precisely repeating quick-change system on the tool support (6) so as to be non-rotatable.

6. Device as claimed in Claim 5, **characterised in that** gaseous and/or liquid media can be supplied to the quick-change system (10) and/or to the tool (7) through the tool support (6).

## Revendications

1. Dispositif pour la fixation réglable en continu d'un outil sur une broche (4) de machine-outil pouvant être entraînée, dans lequel l'outil (7) est fixé de façon interchangeable sur un porte-outil (6), lequel est supporté dans un boîtier (9) de façon pivotante autour d'un axe de porte-outil (8) formant un angle, de préférence un angle droit, avec l'axe de rotation (5) de la broche, **caractérisé en ce que** le porte-outil (6) est pourvu d'un piston de pivotement (11) disposé dans un espace cylindrique (12) du boîtier (9) et pouvant être exposé à des moyens de pression sur des faces opposées.

2. Dispositif selon la revendication 1, **caractérisé en ce que** le porte-outil (6) est en forme de disque sur lequel le piston de pivotement (11) est formé sous la forme d'une portion d'anneau circulaire, disposée de façon étanche dans une chambre de cylindre (12) du boîtier (9) en forme de portion d'anneau circulaire.

3. Dispositif selon la revendication 2, **caractérisé en ce que** les surfaces d'enveloppe (6a, 11b) et les surfaces frontales (11a) du porte-outil (6) et du piston de pivotement (11) sont conformées comme des surfaces de guidage par rapport au boîtier (9).

4. Dispositif selon l'une au moins des revendications 1 à 3, **caractérisé en ce qu'**un système de mesure directe (13) est disposé entre le boîtier (9) et le porte-outil (6).

5. Dispositif selon l'une au moins des revendications 1 à 4, **caractérisé en ce que** l'outil (7) est fixé de manière amovible sur le porte-outil (6), sans possibilité de rotation, au moyen d'un système de changement rapide (10) à répétition précise.

6. Dispositif selon la revendication 5, **caractérisé en ce que** le système de changement rapide (10) et/ou l'outil peuvent être alimentés par des fluides gazeux et/ou liquides à travers le porte-outil (6).
